# EUROPEAN PATENT APPLICATION

(11) **EP 1 640 187 A1**
(43) Date of publication of application: **29.03.2006**
(21) Application number: 04745969.8
(22) Date of filing: 16.06.2004
(51) Int. Cl.: B60C 15/06, B60C 13/00

(54) **PNEUMATIC TIRE**

(30) Priority: 17.06.2003 JP 2003171963
(71) Applicant: THE YOKOHAMA RUBBER CO., LTD., Tokyo 105-8685 (JP)
(72) Inventor: TANAKA, Katsunori, The Yokohama Rubber Co., Ltd., Hiratsuka-shi, Kanagawa 2548601 (JP); AMINO, Naoya, The Yokohama Rubber Co., Ltd., Hiratsuka-shi, Kanagawa 2548601 (JP); TANNO, Atsushi, The Yokohama Rubber Co., Ltd., Hiratsuka-shi, Kanagawa 2548601 (JP)
(74) Representative: HOFFMANN EITLE
(86) International application number: PCT/JP2004/008427
(87) International publication number: WO 2004/113101

(57) **Abstract**

A pneumatic tire reducing road noise without deteriorating durability and rolling resistance. In this pneumatic tire, the bead filler includes a triangle portion abutting a bead core and having a substantially triangular cross-sectional shape, and a uniform-thickness portion extending from a top of the triangle portion in a radially outward direction of the tire and having a substantially uniform thickness. An upper-end position of the uniform-thickness portion is outward, in a radial direction of the tire, from a position 1.6 times as high as the height of the triangle portion, and is at least 5 mm apart from the belt layers. A thickness of the uniform-thickness portion is thicker than 0.1 mm and thinner than 0.5 times a lower-end width of the triangle portion. The bead filler includes a plurality of rubber layers formed of mutually different rubber compositions. The rubber compositions forming these rubber layers have loss tangents (tanδ) gradually decreasing from the outermost-periphery rubber layer toward the innermost-periphery rubber layer, are harder than other rubber compositions neighboring the bead filler, and have breaking elongations whose mutual differences are 50% points or less.

## Description

### TECHNICAL FIELD

The present invention relates to a pneumatic tire provided with a bead filler extending from a bead portion to a sidewall portion. More specifically, the present invention relates to a pneumatic tire allowed to reduce road noise without deteriorating durability and rolling resistance.

### BACKGROUND ART

In a pneumatic tire, in order to ensure driving stability, what is normally performed is to bury, from a bead portion to a sidewall portion, a bead filler formed of a hard rubber composition. Furthermore, there has been proposed an approach to improve a variety of tire performances by devising cross-sectional shapes of the bead filler.

For example, there has been proposed an approach where: an increase in circumferential stiffness and a reduction in longitudinal stiffness are compatibly achieved by elongating a cross-sectional shape of the bead filler, and as a result, road noise having frequencies around 40 Hz and around 100 Hz is reduced (refer to Patent Document 1, for example). In this case, in compliance with noise regulations having been stiffened in recent years, it has been required to make the bead filler still thinner and still higher.

However, in a case where a bead filler formed of a hard rubber composition is buried from a bead portion to a sidewall portion and is made high enough to be extended to a vicinity of a shoulder portion, there arises a problem that rolling resistance and durability are deteriorated.

[Patent Document 1] Japanese patent application *kokai* publication No. HeiB-276713

### DISCLOSURE OF THE INVENTION

An object of the present invention is to provide a pneumatic tire allowed to reduce road noise without deteriorating durability and rolling resistance.

A pneumatic tire according to the present invention for achieving the above object is a pneumatic tire including: a carcass layer mounted between a pair of a left and a right bead portions; belt layers arranged on an outer periphery of the carcass layer located in a tread portion; and a bead filler arranged along the carcass layer on an outer periphery of a bead core in each of the bead portions. The pneumatic tire is characterized in that: the bead filler includes a triangle portion abutting the bead core and having a substantially triangular cross-sectional shape, and a uniform-thickness portion extending from a top of the triangle portion in a radially outward direction of the tire and having a substantially uniform thickness; a position of an upper end of the uniform-thickness portion is outward, in a radial direction of the tire, from a position 1.6 times as high as a height of the triangle portion, and is at least 5 mm apart from the belt layers; a thickness of the uniform-thickness portion is thicker than 0.1 mm and thinner than 0.5 times a width of a lower end of the triangle portion; the bead filler includes a plurality of rubber layers respectively formed of mutually different rubber compositions; plural kinds of the rubber compositions forming these rubber layers have loss tangents (tanδ) gradually decreasing from the rubber layer at the innermost periphery of the rubber layers toward the rubber layer at the outermost periphery thereof, are harder than other rubber compositions neighboring the bead filler and have breaking elongations whose mutual differences are 50% points or less.

By thus defining the cross-sectional shapes of the bead filler and by, while providing a plurality of rubber layers respectively formed of mutually different rubber compositions, defining physical properties of plural kinds of the rubber compositions forming the rubber layers, it becomes possible to reduce road noise without deteriorating durability and rolling resistance.

In the present invention, in order to obtain preferable improvements in the abovementioned performances, it is preferable that the rubber composition of at least one rubber layer (in particular, the rubber layer at the outermost periphery) among the plurality of rubber layers included in the bead filler, except for the rubber layer at the innermost periphery, have a loss tangent (tan δ) of 0.01 to 0.25 when measured at a temperature of 60 °C, a JIS-A hardness of 70 to 95 when measured at a temperature of 23 °C, and a breaking elongation not less than 200% when measured at a temperature of 23 °C in a tensile test.

Additionally, in order for the above physical properties to be exhibited, it is preferable that the rubber composition of at least one rubber layer (in particular, the rubber layer at the outermost periphery) among the plurality of rubber layers included in the bead filler, except for the rubber layer at the innermost periphery, be a rubber composition obtained by blending 20 to 120 weight parts of silica and 0 to 60 weight parts of carbon black with 100 weight parts of rubber. In particular, it is preferable that the bead filler be constituted of two rubber layers respectively formed of mutually different rubber compositions.

### BRIEF DESCRIPTION OF THE DRAWINGS

Fig. 1 is a half cross-sectional view showing a pneumatic tire according to an embodiment of the present invention.
Fig. 2 is a half cross-sectional view showing a pneumatic tire according to another embodiment of the invention.
Fig. 3 is a half cross-sectional view showing a pneumatic tire according to still another embodiment of the invention.
Fig. 4 is a half cross-sectional view showing a pneumatic tire according to still another embodiment of the invention.
Fig. 5 is a half cross-sectional view showing a pneumatic tire according to still another embodiment of the invention.
Fig. 6 is a half cross-sectional view showing a pneumatic tire according to still another embodiment of the invention.
Fig. 7 is a half cross-sectional view showing a pneumatic tire according to still another embodiment of the invention.

### BEST MODES FOR CARRYING OUT THE INVENTION

Hereinafter, a detailed description will be given of a configuration of the present invention with reference to the attached drawings.

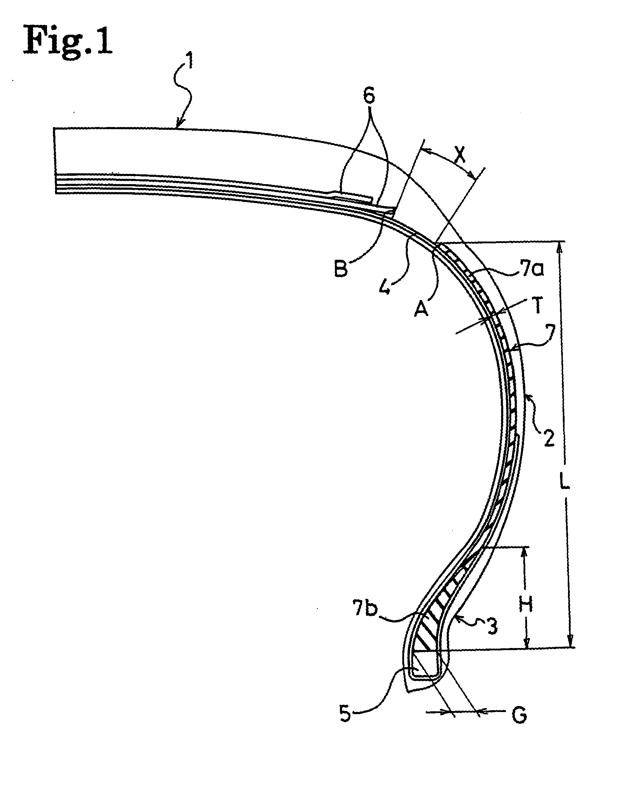

Fig. 1 shows a pneumatic tire according to an embodiment of the present invention. In Fig. 1, reference numerals 1, 2, and 3 respectively denote a tread portion, a sidewall portion, and a bead portion. A carcass layer 4 is mounted between a pair of the left and right bead portions 3, 3, and has an end part folded back from the inside to the outside of the tire around a bead core 5. A plurality of belt layers 6, 6 are buried on the outer periphery of the carcass layer 4 in the tread portion. These belt layers 6, 6 are arranged in order that cords can tilt to the circumferential direction of the tire and that the cords can cross one another between the belt layers.

On an outer periphery of each of the bead cores 5, a bead filler 7 constituted of hard rubber compositions is buried along the carcass layer 4. This bead filler 7 extends from the bead portion 3 along the sidewall portion 2, and beyond the widest-width position of the tire, reaches the shoulder portion of the tire.

In a cross-sectional view taken along a meridian of the tire, this bead filler 7 includes a triangle portion abutting the bead core 5 and having a substantially triangular cross-sectional shape, and a uniform-thickness portion extending from a top of the triangle portion in a radially outward direction of the tire and having a substantially uniform thickness. Here, the bead filler 7 has a height L measured in a radial direction of the tire by taking an upper end of the bead core 5 as a base, and the triangle portion of the bead filler 7 has a height H measured in a radial direction of the tire by taking the upper end of the bead core 5 as a base.

An upper-end position A of the uniform-thickness portion of the beat filler 7 is outward, in a radial direction of the tire, from a position 1.6 times as high as the height H of the triangle portion, and has a distance X being at least 5 mm, the distance X being measured along the inner surface of the tire from an edge B of the belt layers 6. If the upper-end position A of the uniform-thickness portion of the bead filler 7 is inward, in a radial direction of the tire, from the position 1.6 times as high as the height H of the triangle portion, road noise having a frequency around 40 Hz is deteriorated. To the contrary, if the distance X becomes less than 5 mm by having the upper-end position A excessively close to the edge B, rolling resistance is deteriorated while road noise having a frequency around 100 Hz is deteriorated.

A thickness T of the uniform-thickness portion of the bead filler 7 is thicker than 0.1 mm and thinner than 0.5 times a lower-end width G of the triangle portion. It is difficult to make the thickness T of the uniform-thickness portion to be 0.1 mm or less in manufacturing, and to the contrary, if the thickness T of the uniform-thickness portion is thicker than 0.5 times the lower-end width G of the triangle portion, road noise having a frequency around 100 Hz is deteriorated.

The bead filler 7 includes a plurality of rubber layers formed of mutually different rubber compositions. Plural kinds of the rubber compositions forming these rubber layers have loss tangents (tanδ) gradually decreasing from the rubber layer at the innermost periphery of the rubber layers toward the rubber layer at the outermost periphery thereof, are harder than other rubber compositions neighboring the bead filler 7, and have breaking elongations whose mutual differences are 50% points or less. That is, a loss tangent of the rubber composition forming a rubber layer 7a at the outermost periphery is smaller than that of a rubber layer 7b at the innermost periphery. If this relation is turned around, rolling resistance is deteriorated. In addition, a difference between a breaking elongation (in %) of the rubber layer 7a at the outermost periphery and a breaking elongation (in %) of the rubber layer 7b at the innermost periphery is 50% points or less. If the mutual difference exceeds 50%, durability is deteriorated.

It is preferable that a rubber composition of at least one (in particular, the rubber layer 7a at the outermost periphery) among the plurality of rubber layers included in the bead filler 7, except for the rubber layer at the innermost periphery, have a loss tangent (tan δ) of 0.01 to 0.25 when measured at a temperature of 60 °C, a JIS-A hardness of 70 to 95 when measured at a temperature of 23 °C, and a breaking elongation not less than 200% when measured at a temperature of 23 °C in a tensile test.

With regard to the rubber composition forming the rubber layer 7a at the outermost periphery, it is technically difficult to make its loss tangent less than 0.01, and on the other hand, rolling resistance increases if its loss tangent exceeds 0.25. A more desirable range of the loss tangent is 0.07 to 0.25. Note that the loss tangent (tanδ) here is the one measured by using a viscoelastic spectrometer (manufactured by Toyo Seiki Seisaku-sho, Ltd.), with the conditions of a frequency of 20 Hz, an initial distortion of 10 %, and a dynamic distortion of plus or minus 2%.

Additionally, with regard to the rubber composition forming the rubber layer 7a at the outermost periphery, road noise having a frequency around 40 Hz is deteriorated if the JIS-A hardness is less than 70. On the other hand, if the JIS-A hardness exceeds 95, rolling resistance is deteriorated while road noise having a frequency around 100 Hz is deteriorated.

Moreover, with regard to the rubber composition forming the rubber layer 7a at the outermost periphery, if the breaking elongation is less than 200% when measured at a temperature of 23 °C in a tensile test, durability is deteriorated. Although it is not required to particularly limit an upper limit of the breaking elongation, the upper limit is about 350% in reality. Note that the breaking elongation here is the one measured in compliance with JIS K6251.

As the rubber composition exhibiting the above physical properties, it is possible to use one obtained by blending 20 to 120 weight parts of silica and 0 to 60 weight parts of carbon black with 100 weight parts of rubber. In a case where a blended amount of silica is out of the above range, it is difficult to obtain the above physical properties. In a case where carbon black is additionally blended, it becomes difficult to obtain the above physical properties if a blended amount of carbon black exceeds 60 weight parts.

As silica, for example, dry-method white carbon, wet-method white carbon, colloidal silica, and precipitated silica can be cited. These kinds of silica may be used by one or in combination of two or more.

As base rubber, for example, natural rubber (NR), styrene-butadiene copolymer rubber (SBR) can be cited. These kinds of rubber may be used by one or in combination of two or more. Additionally, to the rubber composition thus obtained, in addition to silica and carbon black, a compounding agent used regularly may be added. As the compounding agent, process oil, vulcanizer, vulcanization accelerator, antioxidant, and plasticizer can be cited.

In the pneumatic tire configured as above, the cross-sectional shapes of the bead filler 7 are defined, and additionally, while the two rubber layers 7a and 7b formed of mutually different rubber compositions are provided, the physical properties of two kinds of the rubber compositions forming these rubber layers are defined. Consequently, it becomes possible to reduce road noise without deteriorating durability and rolling resistance.

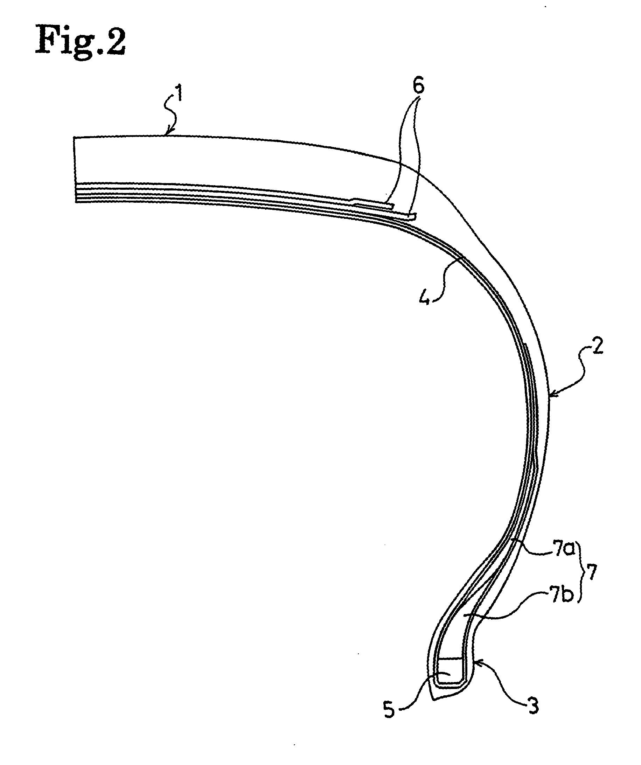

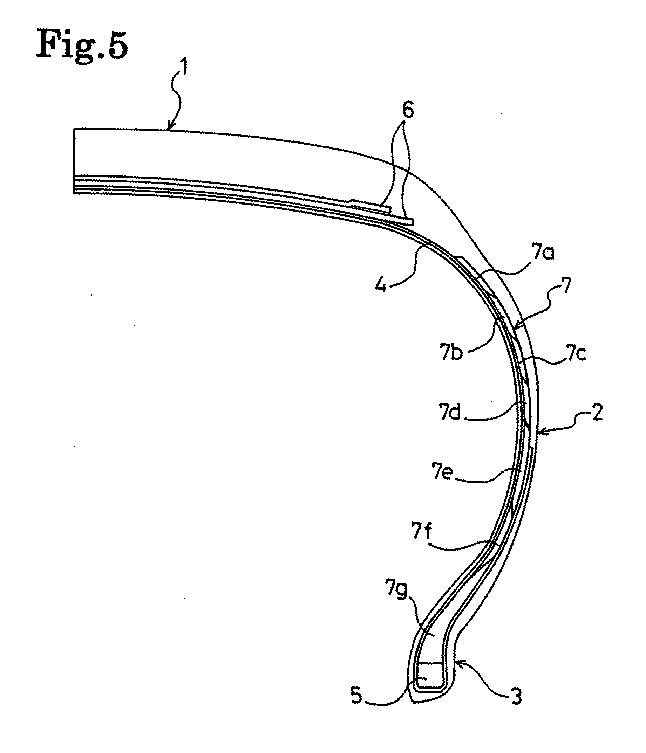

Figs. 2 to 7 respectively show pneumatic tires according to other embodiments of the present invention. In particular, each of Figs. 2 to 4 represents the one in which a height of a bead filler is made relatively short, and each of Figs. 5 to 7 represents the one in which a height of a bead filler is relatively tall.

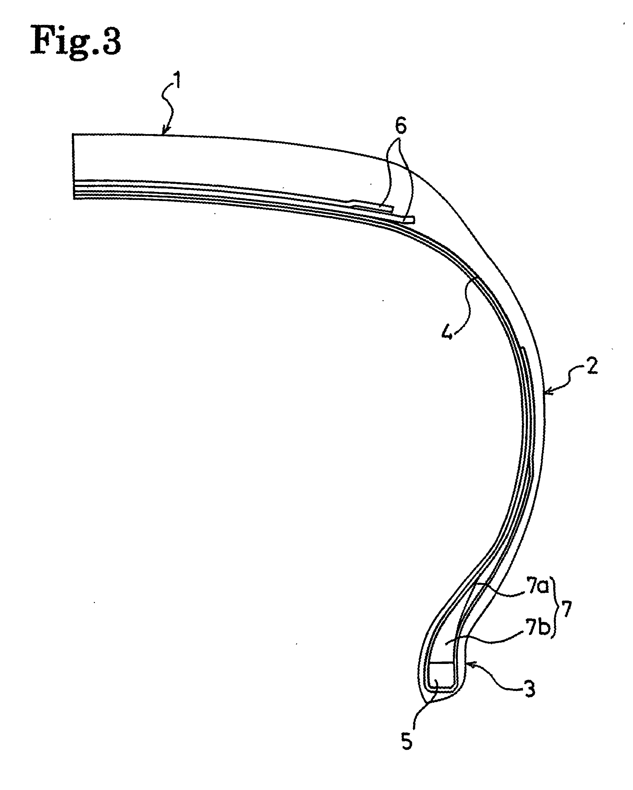

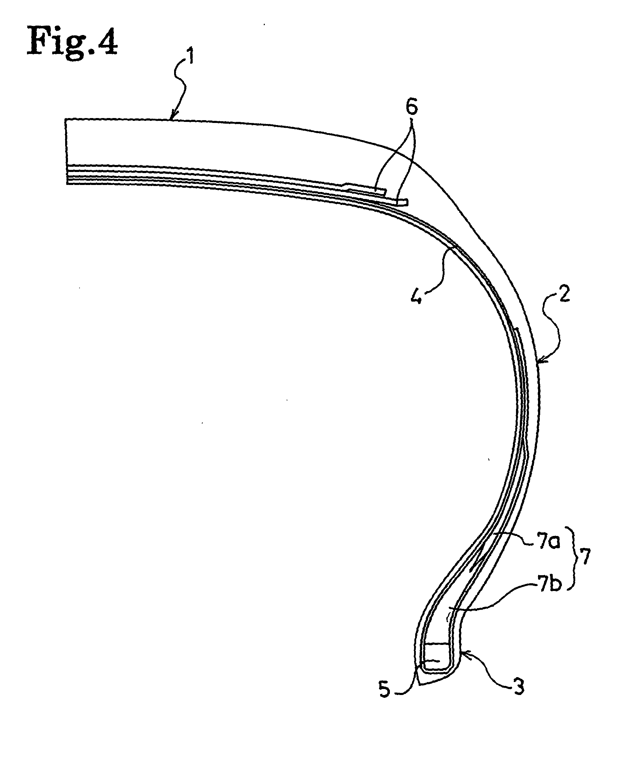

As shown in Fig. 2, the rubber layer 7a at the outermost periphery may be arranged so as to be closer to a main portion of the carcass layer 4 than the rubber layer 7b at the innermost periphery. As shown in Fig. 3, the rubber layer 7a at the outermost periphery may be arranged so as to be closer to a turned-up portion of the carcass layer 4 than the rubber layer 7b at the innermost periphery. As shown in Fig. 4, the rubber layer 7a at the outermost periphery may be arranged so as to be thrust into the rubber layer 7b at the innermost periphery.

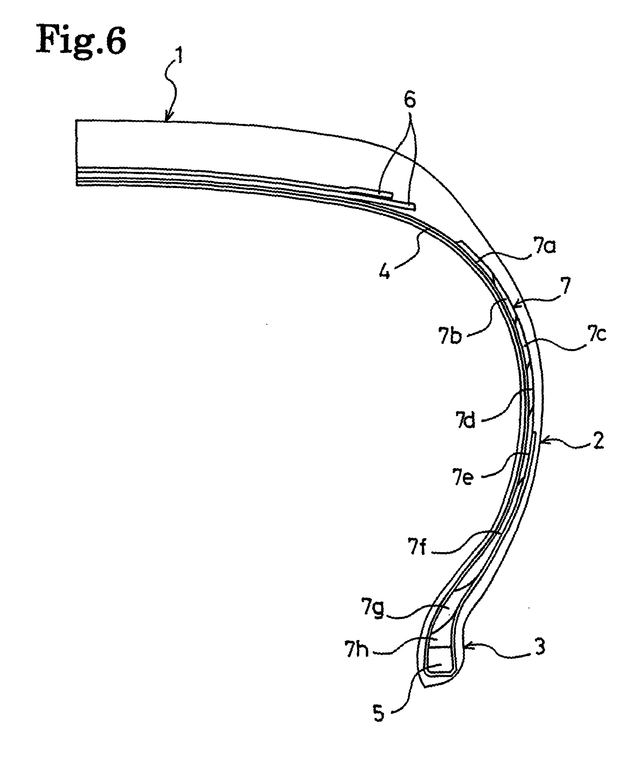

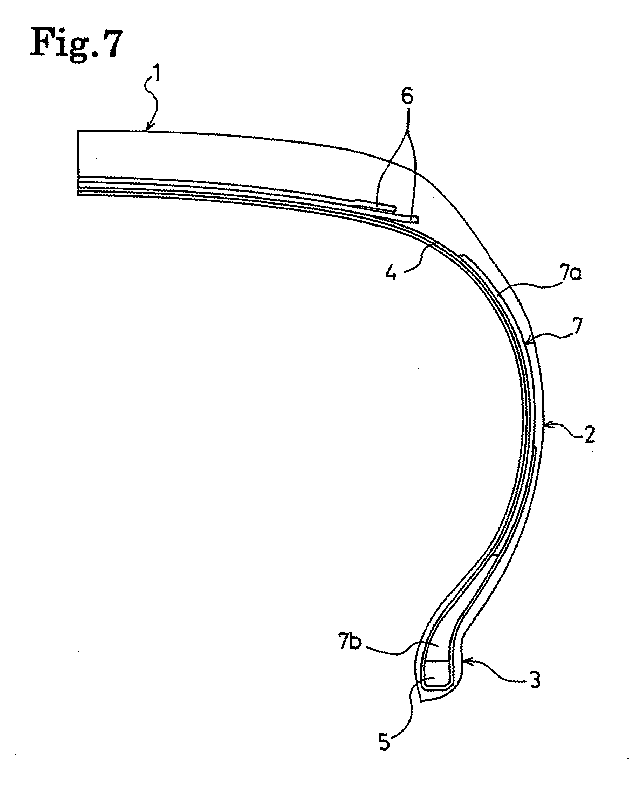

As shown in Fig. 5, the bead filler 7 may include a number of rubber layers 7a to 7g respectively formed of mutually different rubber compositions. Alternatively, as shown in Fig. 6, there may be a plurality of rubber layers 7f to 7h in the triangle portion of the bead filler 7. To the contrary, as shown in Fig. 7, there may be only one rubber layer 7b in the triangle portion of the bead filler 7. Thus, in the present invention, it is possible to variously change a distribution of the rubber layers included in the bead filler, as long as the defined conditions are satisfied.

While the detailed descriptions have been given of the preferred embodiments of the present invention hereinabove, it should be understood that various modifications to, substitutions for, and replacements with the preferred embodiments can be carried out as long as the modifications, the substitutions, and the replacements do not depart from the spirit and the scope of the present invention defined by the attached claims.

### Examples

A conventional example, examples 1 to 9, and comparative examples 1 to 6 were respectively manufactured as pneumatic tires with a tire size of 205/65R15 in which only structures of their bead fillers are made variously different. In the conventional example, each of the bead fillers includes only one rubber layer, and in the examples 1 to 9 and the comparative examples 1 to 6, each of the bead fillers includes two kinds of rubber layers. Then, physical properties respectively of rubber compositions forming the respective rubber layers of the bead fillers are variously different as shown in Tables 1.

For an upper-end position A of each of uniform-thickness portions of the bead fillers, entered is a periphery length measured along an inner surface of the tire from an upper end of each bead core to an upper end of a uniform-thickness portion of the bead filler. Provided that a height H of a triangle portion of the bead filler is 35 mm, 1.6 times the height H is 56 mm, which is 60 mm if it is converted into a periphery length. On the other hand, a periphery length measured along the inner surface of the tire from the upper end of the bead core to an edge of belt layers is 130 mm. Additionally, a lower-end thickness G of the triangle portion is 7.0 mm.

With regard to these test tires, road noise, rolling resistance and durability were assessed by the following manners, and the results thereof are also shown in Tables 1.

### Road noise:

Each of test tires were mounted onto wheels of a rim size of 15 x 6 1/2 JJ respectively, and then were installed to the four wheels of a passenger car in the class with a displacement of 3000 cc. Then, the vehicle was run on a paved road in a state where: an air pressure was 190 kPa; and a speed was 60 km/h. Through a microphone installed at the center of rear sheets of the vehicle, sound pressure levels (in dB) at frequencies of 40 Hz and of 100 Hz were measured. Results of the assessment are shown in differences from a standard value (of the conventional example). A negative value means that road noise is lower than the standard value, and a positive value means that road noise is higher than the standard value.

### Rolling resistance:

Each of the test tires was mounted onto a wheel of a rim size of 15 x 6 1/2 JJ, and then rolling resistance thereof was measured, by using a drum-type tire testing machine, in a state where: an air pressure was 190 kPa; a speed was 80 km/h; and a load was 4.6 kN. Results of the assessment are shown in index numbers where a rolling resistance value of the conventional example is taken as 100. A higher value of the index number means that rolling resistance is higher.

### Durability:

Each of the test tires was mounted onto a wheel of a rim size of 15 x 6 1/2 JJ, and then durability thereof was measured, by using a drum-type tire testing machine, in a state where: an air pressure was 190 kPa; a speed was 80 km/h; and a load was as described below. The load was started with 88% of the maximum load and was increased by 13% each step, and a test was ended with 270% of the maximum load. Note that one step corresponded to two hours until the load reached 140% of the maximum load, and to four hours after the load reached 140% of the maximum load. Results of the assessment are indicated by "OK" for a case where the test tire run to the end of the test and by "NG" for a case where the test tire was destroyed at some midpoint of the test.

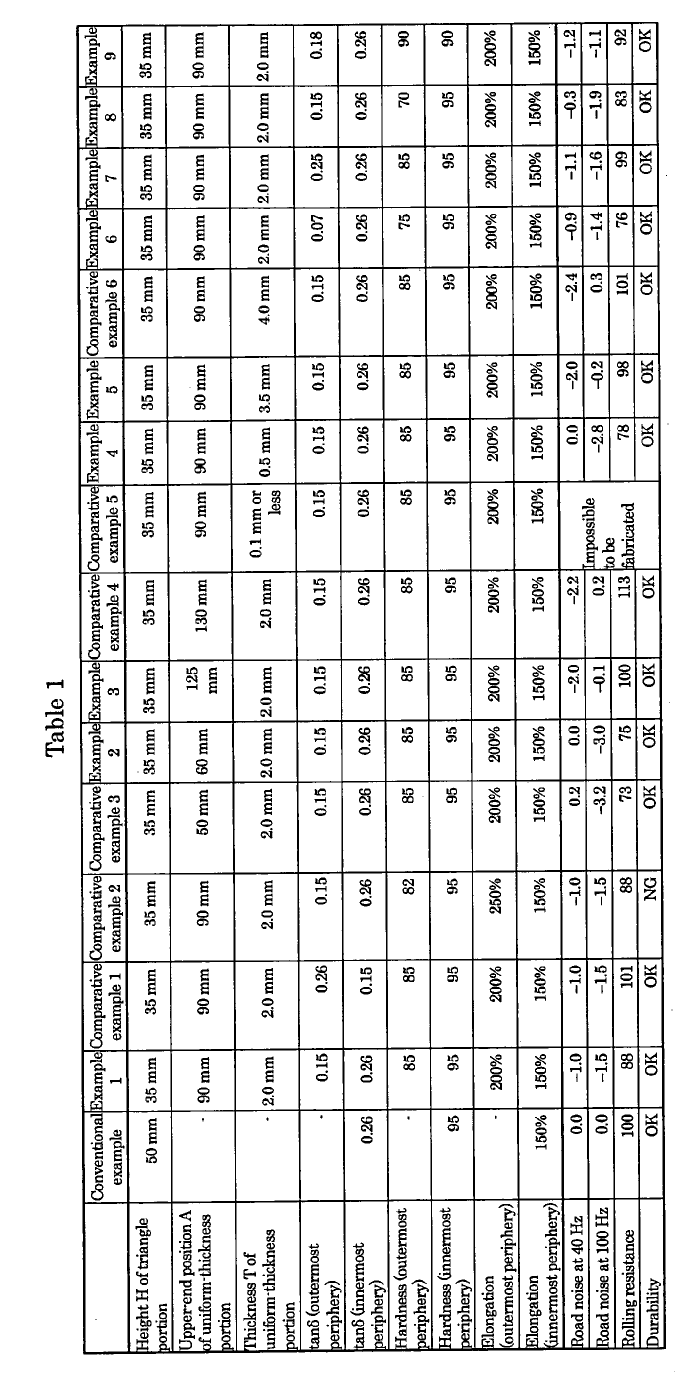

As apparent from this Table 1, as compared to the conventional example, all of the examples 1 to 9 were able to reduce road noise without deteriorating durability and rolling resistance. On the other hand, each of the comparative examples 1 to 6 was found inferior in at least one of durability, rolling resistance and road noise as compared to the conventional example, because each of them did not satisfy a part of the conditions defined by the present invention.

## Claims

1. A pneumatic tire, which includes a carcass layer mounted between a pair of a left and a right bead portions; belt layers arranged on an outer periphery of the carcass layer located in a tread portion; and a bead filler arranged along the carcass layer on an outer periphery of a bead core in each of the bead portions, wherein:
the bead filler includes a triangle portion abutting the bead core and having a substantially triangular cross-sectional shape, and a uniform-thickness portion extending from a top of the triangle portion in a radially outward direction of the tire and having a substantially uniform thickness;
a position of an upper end of the uniform-thickness portion is outward, in a radial direction of the tire, from a position 1.6 times as high as a height of the triangle portion, and is at least 5 mm apart from the belt layers;
a thickness of the uniform-thickness portion is thicker than 0.1 mm and thinner than 0.5 times a width of a lower end of the triangle portion;
the bead filler includes a plurality of rubber layers respectively formed of mutually different rubber compositions; and
plural kinds of the rubber compositions forming these rubber layers have loss tangents (tanδ) gradually decreasing from the rubber layer at the innermost periphery of the rubber layers toward the rubber layer at the outermost periphery thereof, are harder than other rubber compositions neighboring the bead filler and have breaking elongations whose mutual differences are 50% points or less.

2. The pneumatic tire according to claim 1, wherein:
the rubber composition of at least one rubber layer among the plurality of rubber layers included in the bead filler, except for the rubber layer at the innermost periphery, has a loss tangent (tan δ) of 0.01 to 0.25 when measured at a temperature of 60 °C, a JIS-A hardness of 70 to 95 when measured at a temperature of 23 °C, and a breaking elongation not less than 200% when measured at a temperature of 23 °C in a tensile test.

3. The pneumatic tire according to any one of claims 1 and 2, wherein:
the rubber composition of at least one rubber layer among the plurality of rubber layers included in the bead filler, except for the rubber layer at the innermost periphery, is a rubber composition obtained by blending 20 to 120 weight parts of silica and 0 to 60 weight parts of carbon black with 100 weight parts of rubber.

4. The pneumatic tire according to any one of claims 1 to 3, wherein:
the bead filler is constituted of two rubber layers respectively formed of mutually different rubber compositions.
